(19) Europäisches Patentamt
European Patent Office
Office européen des brevets

(11) **EP 4 297 398 A1**

(12) **EUROPEAN PATENT APPLICATION**
published in accordance with Art. 153(4) EPC

(43) Date of publication:
**27.12.2023 Bulletin 2023/52**

(51) International Patent Classification (IPC):
**H04N 5/76** (2006.01)    **G10L 21/0208** (2013.01)

(21) Application number: **22787497.1**

(52) Cooperative Patent Classification (CPC):
**G10L 21/0208; H04M 1/72439; H04N 5/76; H04N 5/926; H04N 21/433; H04N 21/439**

(22) Date of filing: **11.04.2022**

(86) International application number:
**PCT/CN2022/086166**

(87) International publication number:
**WO 2022/218271 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.04.2021 CN 202110415047**

(71) Applicant: **Huawei Technologies Co., Ltd.
Shenzhen, Guangdong 518129 (CN)**

(72) Inventors:
• **TAO, Kai**
  **Shenzhen, Guangdong 518129 (CN)**
• **YIN, Mingjie**
  **Shenzhen, Guangdong 518129 (CN)**
• **PANG, Lichen**
  **Shenzhen, Guangdong 518129 (CN)**
• **CHANG, Qing**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **VIDEO RECORDING METHOD AND ELECTRONIC DEVICES**

(57) A video recording method is provided. In the method, when recording a video including a user, a first electronic device may capture a plurality of frames of images, and encode the plurality of frames of images to obtain a video stream. The first electronic device may further obtain, by using a bone conduction audio signal and a user audio signal that are sent by a second electronic device, a stereo audio signal that matches a sound image direction of the user, encode stereo audio signals corresponding to the plurality of frames of images to obtain an audio stream, and mix the audio stream with the video stream to obtain a video. In the video, a sound image direction of a sound of the user matches a visual image direction of the user. According to technical solutions provided in this application, in a recorded video, it can be ensured that the sound of the user is clear when the sound image direction of the sound of the user matches the visual image direction of the user.

FIG. 6

## Description

This application claims priority to Chinese Patent Application No. 202110415047.4, filed with the China National Intellectual Property Administration on April 17, 2021 and entitled "VIDEO RECORDING METHOD AND ELECTRONIC DEVICE", which is incorporated herein by reference in its entirety.

## TECHNICAL FIELD

This application relates to the field of terminals and communication technologies, and in particular, to a video recording method and an electronic device.

## BACKGROUND

With improvement of shooting functions of mobile phones, more users prefer to record videos including the users when the users are far away from electronic devices. In most cases, the users hope that sounds of the users are clear and have a sense of direction in a recorded video.

With popularization of true wireless stereo (true wireless stereo, TWS) headsets, when a user wears a TWS headset, is far away from an electronic device, and records a video, the TWS headset may avoid another sound signal in an environment as much as possible, collect a clear sound signal of the user, then convert the sound signal into an audio signal, and then transmit the audio signal to the electronic device by using a wireless network. The electronic device may process the received audio signal and a recorded image to obtain a video. In the video, a sound of the user is clear.

However, when the video is recorded by using the foregoing method, although the sound of the user is a stereo when the user speaks, the stereo sound is not stereo after being recorded and processed by the TWS headset. As a result, in the obtained video, the sound of the user does not have a stereo sense, and a sound image direction of the sound of the user cannot match a visual image direction of the user.

## SUMMARY

This application provides a video recording method and an electronic device. When a user is far away from the electronic device, and the electronic device records a video including the user, in a recorded video, it can also be ensured that a sound of the user is clear when a sound image direction of the sound of the user matches a visual image direction of the user.

According to a first aspect, this application provides a video recording method, including: in a video recording process of a first electronic device, the first electronic device collects an image and a first audio signal; the first electronic device determines a sound image direction of a sound of a user in the image based on the image and the first audio signal; the first electronic device generates a stereo audio signal based on the sound image direction of the sound of the user and a user audio signal, where the user audio signal is obtained by a second electronic device and sent to the first electronic device; and the first electronic device generates a video based on the image and the stereo audio signal.

In the foregoing embodiment, the first electronic device calculates the sound image direction of the sound of the user, and is configured to perform stereo processing on the user audio signal, so that a sound image direction of a sound that is restored from the stereo audio signal and that is of the user in a generated video matches a visual image direction of the user. In addition, the user audio signal is collected by the second electronic device, and the second electronic device may be a headset worn by the user. In this way, a collected user audio signal is clear, so that a stereo user audio signal generated by the first electronic device may also be clear. In the generated video, the sound image direction of the sound of the user matches the visual image direction of the user, and the sound of the user is clear. In addition, the stereo audio signal generated based on the sound image direction of the sound of the user and the user audio signal mainly includes sound information of the user, and does not include other sound information in an environment. In some scenarios in which the sound information of the user needs to be highlighted in the video, the method in this embodiment may be used to highlight the sound of the user.

With reference to some embodiments of the first aspect, in some embodiments, that the first electronic device determines a sound image direction of a sound of a user in the image based on the image and the first audio signal specifically includes: the first electronic device performs facial recognition on the image to obtain a pixel location of a face; the first electronic device determines a sound source direction of the user based on the first audio signal; the first electronic device determines a pixel location of the user in the image based on the sound source direction of the user and the pixel location of the face; and the first electronic device determines the sound image direction of the sound of the user in the image based on the pixel location of the user in the image.

In the foregoing embodiment, the first electronic device calculates the sound image direction of the sound of the user by using the collected first audio signal and image. The sound image direction of the sound of the user is used as a parameter of an algorithm for generating the stereo audio signal, so that a sound image direction of a sound that is restored from the stereo audio signal and that is of the user matches a visual image direction of the user in the image.

With reference to some embodiments of the first aspect, in some embodiments, that the first electronic device determines a sound image direction of a sound of a user in the image based on the image and the first audio signal specifically includes: the first electronic device performs facial recognition on the image to obtain a pixel location of a face; the first electronic device determines a sound source direction of the user by using a bone conduction audio signal and with reference to the first audio signal, where the bone conduction audio signal is obtained by the second electronic device and sent to the first electronic device; the first electronic device determines a pixel location of the user in the image based on the sound source direction of the user and the pixel location of the face; and the first electronic device determines the sound image direction of the sound of the user in the image based on the pixel location of the user in the image.

In the foregoing embodiment, in a process of calculating the sound image direction of the sound of the user, a part of the audio signal that is in the first audio signal and that is closely related to the sound information of the user may be selected by using the bone conduction audio signal, so that accuracy of calculating the sound image direction of the sound of the user is improved.

With reference to some embodiments of the first aspect, in some embodiments, that the first electronic device generates a stereo audio signal based on the sound image direction of the sound of the user and a user audio signal specifically includes: the first electronic device generates an ambient stereo audio signal; and the first electronic device generates the stereo audio signal based on the sound image direction of the sound of the user, the user audio signal, and the ambient stereo audio signal.

In the foregoing embodiment, in the process of generating the stereo audio signal, not only the user audio signal but also an ambient audio signal is used, so that a generated stereo audio signal includes not only the sound information of the user but also the other sound information in the environment.

With reference to some embodiments of the first aspect, in some embodiments, that the first electronic device generates an ambient stereo audio signal specifically includes: the first electronic device performs adaptive blocking filtering on the first audio signal based on the user audio signal, to filter out sound information that is in the first audio signal and that is of the user; and the first electronic device generates the ambient stereo audio signal based on a filtered first audio signal.

In the foregoing embodiment, in the first audio signal collected by the first electronic device, other clearer sound information in the environment may be included. The first electronic device filters out the sound information that is in the first audio signal and that is of the user by using the collected first audio signal, so that other true sound information in the environment may be obtained.

With reference to some embodiments of the first aspect, in some embodiments, that the first electronic device generates an ambient stereo audio signal specifically includes: the first electronic device generates a first stereo audio signal by using the first audio signal; and the first electronic device performs adaptive blocking filtering on the first stereo audio signal based on the user audio signal, to filter out sound information that is in the first stereo audio signal and that is of the user, to obtain the ambient stereo audio signal.

In the foregoing embodiment, in the first audio signal collected by the first electronic device, other clearer sound information in the environment may be included. The first electronic device filters out the sound information that is in the first audio signal and that is of the user by using the collected first audio signal, so that other true sound information in the environment may be obtained.

With reference to some embodiments of the first aspect, in some embodiments, that the first electronic device generates the stereo audio signal based on the sound image direction of the sound of the user, the user audio signal, and the ambient stereo audio signal specifically includes: the first electronic device generates a user stereo audio signal based on the sound image direction of the sound of the user and the user audio signal; the first electronic device enhances the user stereo audio signal without changing the ambient stereo audio signal; and the first electronic device generates the stereo audio signal based on an enhanced user stereo audio signal and the ambient stereo audio signal.

In the foregoing embodiment, when the user stereo audio signal includes both the user stereo audio signal and the ambient stereo audio signal, audio zooming may be performed. When the user in the image is closer to the first electronic device, the sound of the user may become larger, and an ambient sound does not change. When the user in the image is farther away from the first electronic device, the sound of the user may become smaller, and the ambient sound does not change.

With reference to some embodiments of the first aspect, in some embodiments, that the first electronic device generates the stereo audio signal based on the sound image direction of the sound of the user, the user audio signal, and the ambient stereo audio signal specifically includes: the first electronic device generates a user stereo audio signal based on the sound image direction of the sound of the user and the user audio signal; the first electronic device enhances the user stereo audio signal while suppressing the ambient stereo audio signal; and the first electronic device generates the stereo audio signal based on an enhanced user stereo audio signal and a suppressed ambient stereo audio signal.

In the foregoing embodiment, when the user stereo audio signal includes both the user stereo audio signal and the ambient stereo audio signal, audio zooming may be performed. When the user in the image is closer to the first electronic device, the sound of the user may become larger, and an ambient sound becomes smaller. When the user in the image is farther away from the first electronic device, the sound of the user may be smaller, and the ambient sound becomes smaller.

With reference to some embodiments of the first aspect, in some embodiments, the user audio signal is obtained by performing, by the second electronic device, joint noise reduction processing on a second audio signal based on the bone conduction audio signal to remove other sound information that is in the second audio signal and that is in a surrounding environment of the second electronic device.

In the foregoing embodiment, filtering processing is performed on the second audio signal by using the bone conduction audio signal, so that the obtained user audio signal is basically information about the sound of the user. When the first electronic device calculates the sound image direction of the sound of the user by using the user audio signal, an impact of other sound information in a calculation result environment is small, and a calculation result is more accurate.

With reference to some embodiments of the first aspect, in some embodiments, the user audio signal is obtained by performing, by the second electronic device, noise reduction processing based on a second audio signal to remove other sound information that is in the second audio signal and that is in a surrounding environment of the second electronic device.

In the foregoing embodiment, filtering processing is performed on the second audio signal to remove a part of the sound information in the environment, so that the information about the sound of the user in the obtained user audio signal is stored. When the first electronic device uses the user audio signal to calculate the sound image direction of the sound of the user, an impact of other sound information in a calculation result environment is small, and a calculation result is accurate.

According to a second aspect, this application provides an electronic device. The electronic device includes: one or more processors and a memory, where the memory is coupled to the one or more processors, the memory is configured to store computer program code, the computer program code includes computer instructions, and the one or more processors invoke the computer instructions to enable the electronic device to perform: collecting an image and a first audio signal in a video recording process; determining a sound image direction of a sound of a user in the image based on the image and the first audio signal; generating a stereo audio signal based on the sound image direction of the sound of the user and a user audio signal, where the user audio signal is obtained by a second electronic device and sent to the electronic device; and generating a video based on the image and the stereo audio signal.

In the foregoing embodiment, the first electronic device calculates the sound image direction of the sound of the user, and is configured to perform stereo processing on the user audio signal, so that a sound image direction of a sound that is restored from the stereo audio signal and that is of the user in a generated video matches a visual image direction of the user. In addition, the user audio signal is collected by the second electronic device, and the second electronic device may be a headset worn by the user. In this way, a collected user audio signal is clear, so that a stereo user audio signal generated by the first electronic device may also be clear. In the generated video, the sound image direction of the sound of the user matches the visual image direction of the user, and the sound of the user is clear. In addition, the stereo audio signal generated based on the sound image direction of the sound of the user and the user audio signal mainly includes sound information of the user, and does not include other sound information in an environment. In some scenarios in which the sound information of the user needs to be highlighted in the video, the method in this embodiment may be used to highlight the sound of the user.

With reference to some embodiments of the second aspect, in some embodiments, the one or more processors are specifically configured to invoke the computer instructions to enable the electronic device to perform: performing facial recognition on the image to obtain a pixel location of a face; determining a sound source direction of the user based on the first audio signal; determining a pixel location of the user in the image based on the sound source direction of the user and the pixel location of the face; and determining the sound image direction of the sound of the user in the image based on the pixel location of the user in the image.

In the foregoing embodiment, the first electronic device calculates the sound image direction of the sound of the user by using the collected first audio signal and image. The sound image direction of the sound of the user is used as a parameter of an algorithm for generating the stereo audio signal, so that a sound image direction of a sound that is restored from the stereo audio signal and that is of the user matches a visual image direction of the user in the image.

With reference to some embodiments of the second aspect, in some embodiments, the one or more processors are specifically configured to invoke the computer instructions to enable the electronic device to perform: performing facial recognition on the image to obtain a pixel location of a face; determining a sound source direction of the user by using a bone conduction audio signal and with reference to the first audio signal, where the bone conduction audio signal is obtained by the second electronic device and sent to the electronic device; determining a pixel location of the user in the image based on the sound source direction of the user and the pixel location of the face; and determining the sound image direction of the sound of the user in the image based on the pixel location of the user in the image.

In the foregoing embodiment, in a process of calculating the sound image direction of the sound of the user, a part of the audio signal that is in the first audio signal and that is closely related to the sound information of the user may be selected by using the bone conduction audio signal, so that accuracy of calculating the sound image direction of the sound of the user is improved.

With reference to some embodiments of the second aspect, in some embodiments, the one or more processors are specifically configured to invoke the computer instructions to enable the electronic device to perform: generating an ambient stereo audio signal; and generating the stereo audio signal based on the sound image direction of the sound of the user, the user audio signal, and the ambient stereo audio signal.

In the foregoing embodiment, in the process of generating the stereo audio signal, not only the user audio signal but also an ambient audio signal is used, so that a generated stereo audio signal includes not only the sound information of the user but also the other sound information in the environment.

With reference to some embodiments of the second aspect, in some embodiments, the one or more processors are specifically configured to invoke the computer instructions to enable the electronic device to perform: performing adaptive blocking filtering on the first audio signal based on the user audio signal, to filter out sound information that is in the first audio signal and that is of the user; and generating the ambient stereo audio signal based on a filtered first audio signal.

In the foregoing embodiment, in the first audio signal collected by the first electronic device, other clearer sound information in the environment may be included. The first electronic device filters out the sound information that is in the first audio signal and that is of the user by using the collected first audio signal, so that other true sound information in the environment may be obtained.

With reference to some embodiments of the second aspect, in some embodiments, the one or more processors are specifically configured to invoke the computer instructions to enable the electronic device to perform: performing adaptive blocking filtering on a first stereo audio signal based on the user audio signal, to filter out sound information of the user in the first stereo audio signal, to obtain the ambient stereo audio signal.

In the foregoing embodiment, in the first audio signal collected by the first electronic device, other clearer sound information in the environment may be included. The first electronic device filters out the sound information that is in the first audio signal and that is of the user by using the collected first audio signal, so that other true sound information in the environment may be obtained.

With reference to some embodiments of the second aspect, in some embodiments, the one or more processors are specifically configured to invoke the computer instructions to enable the electronic device to perform: generating a user stereo audio signal based on the sound image direction of the sound of the user and the user audio signal; enhancing the user stereo audio signal without changing the ambient stereo audio signal; and generating the stereo audio signal based on an enhanced user stereo audio signal and the ambient stereo audio signal.

In the foregoing embodiment, when the user stereo audio signal includes both the user stereo audio signal and the ambient stereo audio signal, audio zooming may be performed. When the user in the image is closer to the first electronic device, the sound of the user may become larger, and an ambient sound does not change. When the user in the image is farther away from the first electronic device, the sound of the user may become smaller, and the ambient sound does not change.

With reference to some embodiments of the second aspect, in some embodiments, the one or more processors are specifically configured to invoke the computer instructions to enable the electronic device to perform: generating a user stereo audio signal based on the sound image direction of the sound of the user and the user audio signal; enhancing the user stereo audio signal while suppressing the ambient stereo audio signal; and generating the stereo audio signal based on an enhanced user stereo audio signal and a suppressed ambient stereo audio signal.

In the foregoing embodiment, when the user stereo audio signal includes both the user stereo audio signal and the ambient stereo audio signal, audio zooming may be performed. When the user in the image is closer to the first electronic device, the sound of the user may become larger, and an ambient sound becomes smaller. When the user in the image is farther away from the first electronic device, the sound of the user may be smaller, and the ambient sound becomes smaller.

According to a third aspect, an embodiment of this application provides a chip system. The chip system is used in an electronic device, the chip system includes one or more processors, and the processor is configured to invoke computer instructions to enable the electronic device to perform the method according to any one of implementations of the first aspect.

According to a fourth aspect, an embodiment of this application provides a computer program product including instructions. When the computer program product is run on an electronic device, the electronic device is enabled to perform the method according to any one of implementations of the first aspect.

According to a fifth aspect, an embodiment of this application provides a computer-readable storage medium, including instructions. When the instructions are run on an electronic device, the electronic device is enabled to perform the method according to any one of implementations of the first aspect.

It may be understood that the chip system provided in the third aspect, the computer program product provided in the fourth aspect, and the computer storage medium provided in the fifth aspect are configured to perform the method according to embodiments of this application. Therefore, for beneficial effects that can be achieved by the chip system, the computer program product, and the computer storage medium, refer to beneficial effects in the corresponding method. Details are not described herein again.

**BRIEF DESCRIPTION OF DRAWINGS**

FIG. 1a is a schematic diagram of structures of a world coordinate system, a camera coordinate system, and an image plane coordinate system according to an embodiment of this application;

FIG. 1b and FIG. 1c are schematic diagrams of image pixel coordinate systems according to an embodiment of this application;

FIG. 2a and FIG. 2b are schematic diagrams of video recording in a solution according to an embodiment of this application;

FIG. 3 is a schematic diagram of a structure of a communication system 100 according to an embodiment of this application;

FIG. 4 is a schematic diagram of a structure of a first electronic device according to an embodiment of this application;

FIG. 5 is a schematic diagram of a structure of a second electronic device according to an embodiment of this application;

FIG. 6 is a schematic diagram of signaling interaction of a video recording method according to an embodiment of this application; and

FIG. 7 is a flowchart of determining, by a first electronic device, a sound image direction of a sound that corresponds to a user audio signal and that is of a user according to an embodiment of this application.

**DESCRIPTION OF EMBODIMENTS**

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items.

The following terms "first" and "second" are only intended for a purpose of description, and should not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

For ease of understanding, related terms and concepts in embodiments of this application are first described below.

(1) Visual image direction:

In an embodiment of this application, a visual image direction of a user is a location that is determined from an image and that is of the user relative to a camera center in a real world when an electronic device obtains the image including the user. A reference coordinate system of the location may be a camera coordinate system.

It may be understood that, in some cases, when the location of the user relative to the camera center in the real world does not change, it may be felt from the image that the location of the user relative to the camera center in the real world changes. For example, an image obtained by changing a parameter (for example, a focal length) in a camera by the electronic device, or an image obtained by cropping the image including the user.

Determining of the visual image direction involves a world coordinate system, a camera coordinate system, an image plane coordinate system, and an image pixel coordinate system.

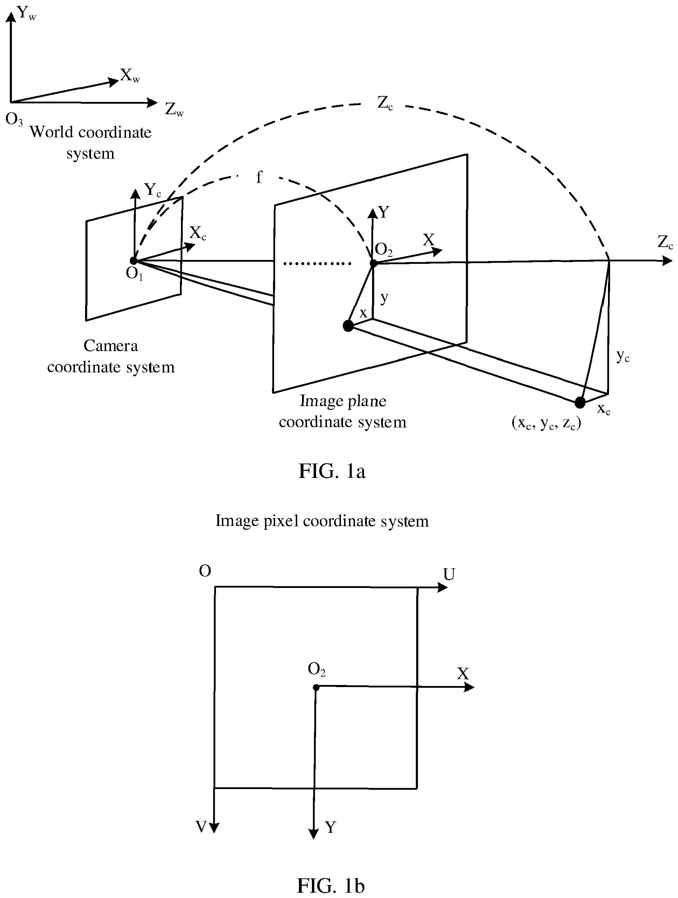

FIG. 1a shows an example of a world coordinate system, a camera coordinate system, and an image plane coordinate system according to an embodiment of this application.

The world coordinate system is represented by $O_3$-$X_w$-$Y_w$-$Z_w$. Coordinates of a user in a real world may be obtained by using the world coordinate system.

The camera coordinate system is represented by $O_1$-$X_c$-$Y_c$-$Z_c$. $O_1$ is an optical center of a camera and is also an origin of the camera coordinate system. An $X_c$ axis, a $Y_c$ axis, and a $Z_c$ axis are coordinate axes of the camera coordinate system, and the $Z_c$ axis is a main optical axis.

Coordinates of a specific point in the world coordinate system may be converted to be in the camera coordinate system through rigid transformation.

The camera collects light reflected by the user, and presents the light on an image plane, to obtain an optical image of the user. An image plane coordinate system may be established on the image plane.

The image plane coordinate system is represented by $O_2$-X-Y. $O_2$ is a center of the optical image, and is also an origin of the image plane coordinate system. An X axis and a Y axis are parallel to the $X_c$ axis and the $Y_c$ axis.

Coordinates of a specific point in the camera coordinate system may be converted to be in the image plane coordinate system through perspective projection.

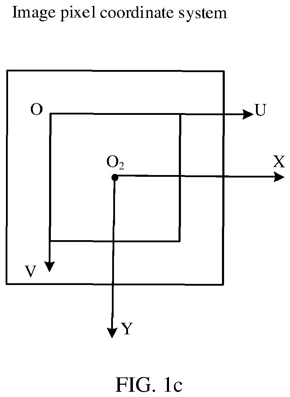

FIG. 1b and FIG. 1c are schematic diagrams of image pixel coordinate systems according to an embodiment of this application.

An electronic device may process an optical image in an image plane, to obtain an image that may be displayed on a display.

As shown in FIG. 1b, in some embodiments, an image plane coordinate system is established in the image plane, and is represented by $O_2$-X-Y. The electronic device may not crop an image in the image plane, and directly display an image corresponding to the image on the display. The image pixel coordinate system is established on the image, and the image pixel coordinate system is represented by O-U-V with a unit pixel. O is a vertex of the image. A U axis and a V axis are parallel to an X axis and a Y axis.

As shown in FIG. 1c, in some embodiments, an image plane coordinate system is established in the image plane, and is represented by $O_2$-X-Y. The electronic device may crop an image in the image plane, and display an image corresponding to an image obtained after cropping on the display. The image pixel coordinate system is established on the image, and the image pixel coordinate system is represented by O-U-V O is a vertex of the image corresponding to the image obtained after cropping. A U axis and a V axis are parallel to an X axis and a Y axis.

In some other embodiments, the electronic device may further perform zooming and the like on the image in the image plane, to obtain an image that may be displayed on the display. Then, the image pixel coordinate system may be established by using the vertex of the image as a coordinate origin.

The electronic device may determine a location of the user relative to the camera center by using a specific point on the user. In this way, when the electronic device may determine the location of the point relative to the camera center, the location may be converted into pixel coordinates of a pixel point corresponding to the point in the image pixel coordinate system. Similarly, when obtaining pixel coordinates of a specific pixel point in the image pixel coordinate system, the electronic device may also determine, by using the pixel coordinates, a location of a point corresponding to the pixel point relative to the camera center. In this way, the electronic device may obtain pixel coordinates of the user in the image by using the location of the user relative to the camera center. Alternatively, the location of the user relative to the camera center may be obtained by using the pixel coordinates of the user in the image. A specific process is described below, and details are not described herein.

In this embodiment of this application, a visual image direction of one user in a camera coordinate system may be represented in a plurality of manners, including a direction angle relative to a center of the camera coordinate system. The direction angle may include an azimuth angle and a pitch angle. For example, the pitch angle is an angle from an image of an object to a $Z_c$ axis and is m°, and the azimuth angle is an angle from an image of an object to a Yc axis and is n°. In this case, the visual image direction of the user may be denoted as (m°, n°). Distances relative to an $X_c$ axis, the $Y_c$ axis, and the $Z_c$ axis of the camera are respectively a, b, and c. In this case, the visual image direction of the user may be denoted as (a, b, c). Alternatively, another representation manner may be used to define the visual image direction of one user relative to the camera coordinate system. This is not limited in this embodiment of this application.

To enable a sound image direction of a sound of the user in a video recorded by the electronic device to match the visual image direction of the user, one solution is that, a sound signal is collected by using a microphone of the electronic device, and then the sound signal is converted into an audio signal in an electrical signal form. Then, the electronic device may focus the audio signal, and focus the audio signal to an expected area (for example, an area at which the user is located when speaking), and the electronic device reproduces a focused audio signal into a sound. In this way, the sound image direction of the sound of the user in a recorded video matches the visual image direction of the user.

The sound image direction is a direction of a sound when the sound is propagated to the electronic device by using a sound signal, the sound signal is collected by the electronic device, and the electronic device converts the sound signal into an audio signal and then reproduces a sound corresponding to the audio signal.

However, when this solution is used, when the user is far away from the electronic device, the electronic device also collects another sound signal in an environment while collecting the sound signal of the user. In addition, the sound signal of the user is easily affected by distance attenuation during propagation in the air. As a result, in the recorded video, the sound of the user is usually unclear.

To resolve a problem in the foregoing solution that when the user is far away from the electronic device, the sound of the user in the recorded video is unclear, another solution is that, the user wears a TWS headset, and then collects the sound signal of the user by using the TWS headset. A microphone of the TWS headset is very close to the user, so that the TWS headset may collect the sound signal of the user at a short distance, and isolate a part of the another sound signal in the environment. When the sound signal of the user is collected, collection of the another sound signal in the environment is reduced. For a part of collected another sound signal in the environment, the TWS headset may perform noise reduction processing on the part of collected another sound signal, to remove the part of another sound signal and retain the sound signal of the user, and then the sound signal is transmitted to the electronic device by using a wireless network. The electronic device may process the received sound signal and a recorded image, to obtain a video. In the video, the sound of the user is clear.

However, when this solution is used, the microphone of the TWS headset always collects the sound signal of the user at the ear of the user. Therefore, for the microphone, a direction of the collected sound signal of the user does not change, and is always a direction of a sound-making part of the user relative to a microphone center. However, for a camera of the electronic device, when the direction of the sound signal of the user does not change, a direction of a captured image of the user may change.

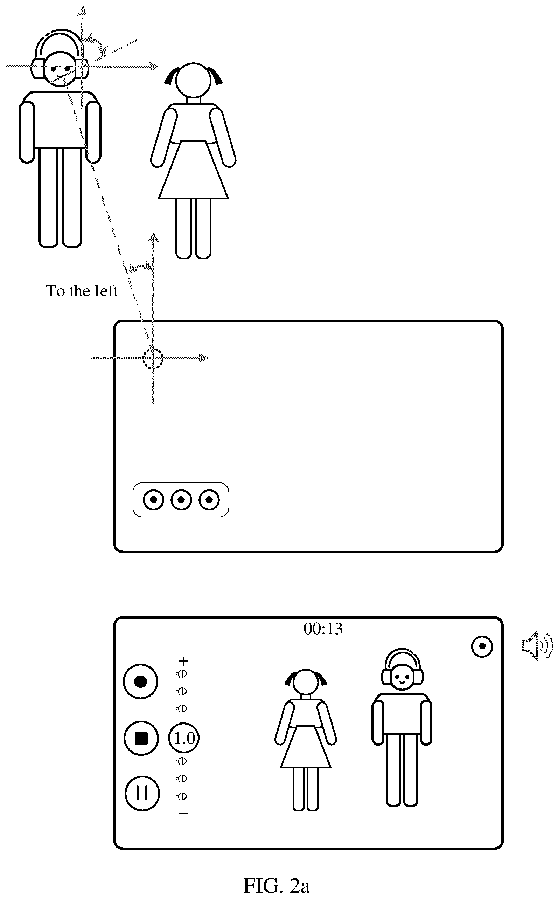

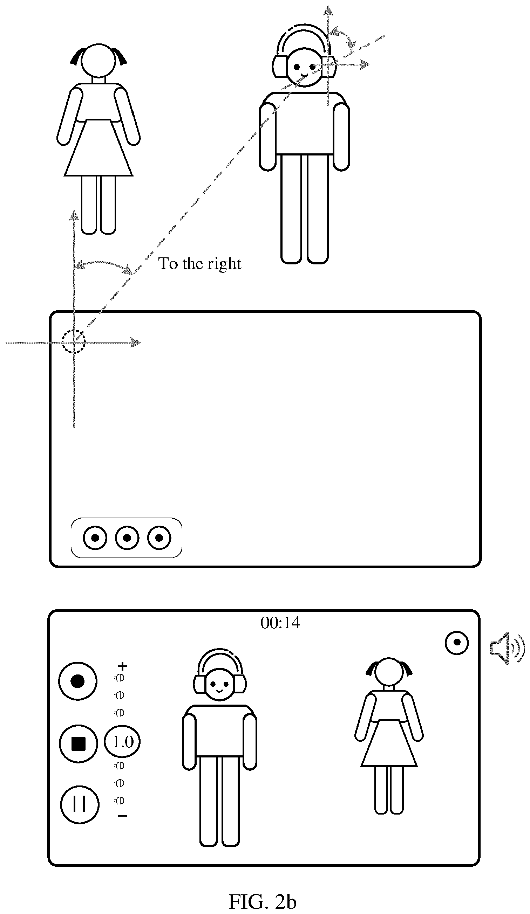

As shown in FIG. 2a, at a specific moment, when the user makes a sound, the user is to the left relative to a direction of a camera center of the electronic device. In this case, it is assumed that in the obtained image, the visual image direction of the user is to the left relative to the direction of the camera center. As shown in FIG. 2b, at another moment, a location of the user obviously changes. In this case, the user is to the right relative to the direction of the camera center of the electronic device. In this case, it is assumed that in the obtained image, the visual image direction of the user is to the right relative to the direction of the camera center. However, the direction of the user relative to the microphone center of the TWS headset basically does not change at two consecutive moments, and the direction of the sound signal that is of the user and that is collected by the microphone basically does not change. In the recorded video, the sound image direction of the sound of the user does not change.

Therefore, when a sound corresponding to the sound signal collected by the TWS headset is reproduced in a video, the sound image direction of the sound of the user does not change, but the visual image direction of the user changes in the video. In this way, in the obtained video, the sound image direction of the sound of the user does not match the visual image direction of the user.

However, according to the video recording method provided in this embodiment of this application, when the user is far away from the electronic device, and the electronic device is used to record a video, in a recorded video, the sound image direction of the sound of the user matches the visual image direction of the user, and in the video, the sound of the user is clear.

In this embodiment of this application, the user wears the TWS headset, and records a video including the user when the user is far away from a mobile phone. For this scenario, refer to FIG. 2a and FIG. 2b. Differently, when the method in this embodiment of this application is used, in a process in which a location of the user changes, although the direction of the sound signal of the user collected by the microphone basically remains unchanged, after the TWS headset transmits the sound signal to the electronic device, the electronic device may obtain, by using the sound signal and the visual image direction of the user in the image, a sound image direction of a sound that corresponds to the sound signal and that is of the user. The sound image direction matches the visual image direction of the user. When the sound that corresponds to the sound signal and that is of the user is reproduced by using the sound image direction, the sound of the user may match the visual image direction of the user. For example, in FIG. 2a, the visual image direction of the user is to the left relative to the direction of the camera center. In this case, the sound image direction of the sound of the user is also to the left relative to the camera. In FIG. 2b, the visual image direction of the user is to the right relative to the direction of the camera center. In this case, the sound image direction of the sound of the user is also to the right relative to the camera.

In this way, in the recorded video, the sound image direction of the sound of the user matches the visual image direction of the user, and when the sound signal of the user is collected by using the TWS headset, the sound of the user is clear in the video.

The following first describes a communication system 100 used in embodiments of this application.

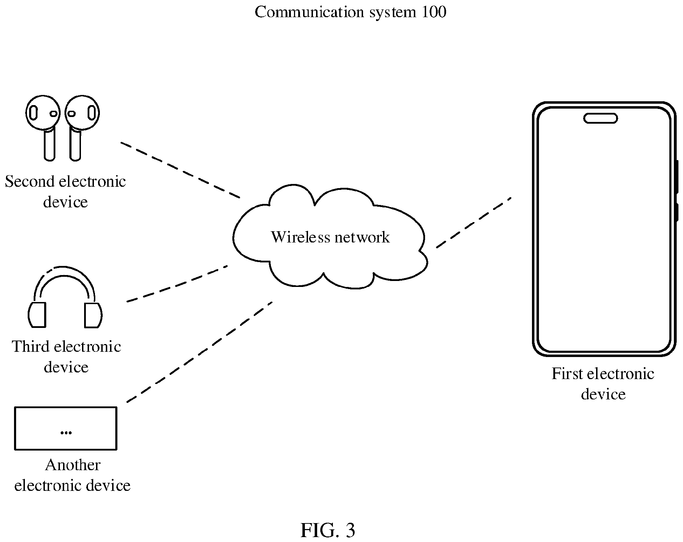

FIG. 3 is a schematic diagram of a structure of a communication system 100 according to an embodiment of this application.

As shown in FIG. 3, the communication system 100 includes a plurality of electronic devices, for example, a first electronic device, a second electronic device, and a third electronic device.

The first electronic device in this embodiment of this application may be a terminal device that carries Android, Huawei HarmonyOS (Huawei HarmonyOS), iOS, Microsoft, or another operating system, for example, a smart screen, a mobile phone, a tablet computer, a notebook computer, and a personal computer.

The second electronic device and the third electronic device may collect a sound signal, convert the sound signal into an electrical signal, and then transmit the electrical signal to the first electronic device. For example, the second electronic device and the third electronic device may be a TWS headset, a Bluetooth headset, and the like.

A wireless network is used to provide various services, such as a communication service, a connection service, and a transmission service, for the electronic device in embodiments of this application.

The wireless network includes: Bluetooth (Bluetooth, BT), a wireless local area network (wireless local area network, WLAN) technology, a wireless wide area network (wireless wide area network, WWAN) technology, and the like.

The first electronic device may establish connections to the second electronic device and the third electronic device by using the wireless network, and then transmit data.

For example, the first electronic device may search for the second electronic device. When the second electronic device is found, the first electronic device may send a request for establishing a connection to the second electronic device. After receiving the request, the second electronic device may establish a connection to the first electronic device. In this case, the second electronic device may convert a collected sound signal into the electrical signal, that is, an audio signal, and transmit the electrical signal to the first electronic device by using the wireless network.

The following describes the first electronic device in the communication system 100.

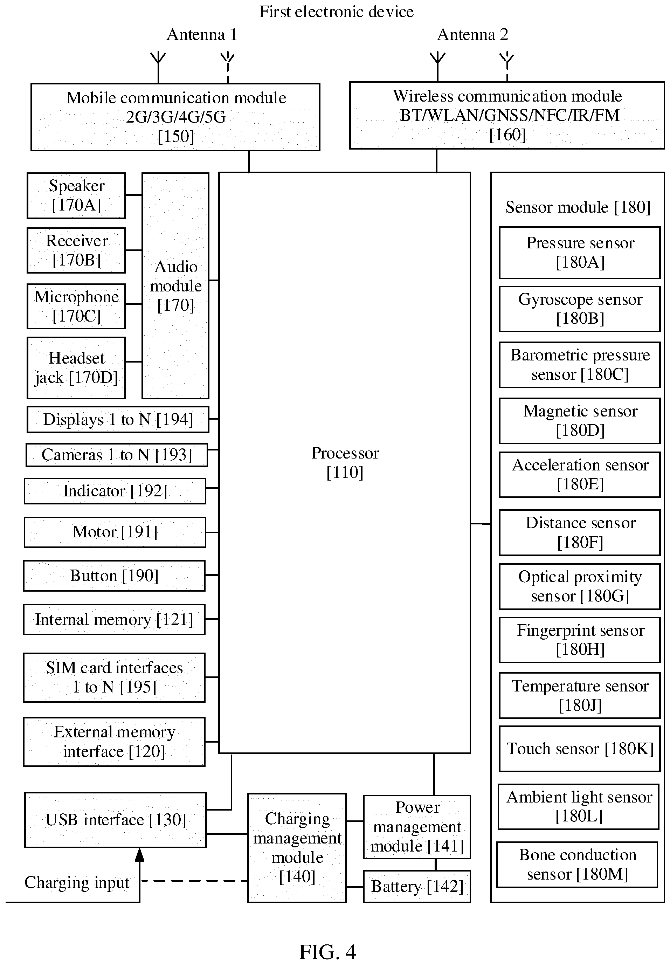

FIG. 4 is a schematic diagram of a structure of a first electronic device according to an embodiment of this application.

The following uses the first electronic device as an example to describe embodiments in detail. It should be understood that the first electronic device may include more or fewer components than those shown in the figure, two or more components may be combined, or there may be different component configurations. Various components shown in the figure may be implemented by using hardware including one or more signal processors and/or application-specific integrated circuits, software, or a combination of hardware and software.

The first electronic device may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instruction or the data again, the processor may directly invoke the instruction or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to: perform audio communication, and sample, quantize, and encode an analog signal. In some embodiments, the audio module 170 may be coupled to the wireless communication module 160 through a PCM bus interface.

The UART interface is a universal serial data bus, and is configured to perform asynchronous communication. The bus may be a two-way communication bus. The bus converts to-be-transmitted data between serial communication and parallel communication.

The MIPI interface may be configured to connect the processor 110 to a peripheral component like the display 194 or the camera 193.

The GPIO interface may be configured by software. The GPIO interface may be configured as a control signal or a data signal.

The SIM interface may be configured to communicate with the SIM card interface 195, to implement a function of transmitting data to a SIM card or reading data in a SIM card.

The USB interface 130 is an interface that conforms to a USB standard specification, and may be specifically a mini USB interface, a micro USB interface, a USB type-C interface, or the like. The USB interface 130 may be configured to connect to a charger to charge the first electronic device, or may be configured to transmit data between the first electronic device and a peripheral device, or may be configured to connect to a headset for playing audio through the headset. Alternatively, the interface may be configured to connect to another electronic device, for example, an AR device.

It may be understood that an interface connection relationship, between modules, illustrated in this embodiment of the present invention is merely an example for description, and does not constitute a limitation on a structure of the first electronic device. In some other embodiments of this application, the first electronic device may alternatively use an interface connection manner different from that in the foregoing embodiment, or a combination of a plurality of interface connection manners.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like.

A wireless communication function of the first electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device may be configured to cover one or more communication bands. Different antennas may be multiplexed to improve antenna utilization. For example, the antenna 1 may be multiplexed as a diversity antenna in a wireless local area network. In some other embodiments, the antennas may be used in combination with a tuning switch.

The mobile communication module 150 may provide a solution that includes wireless communication such as 2G/3G/4G/5G and that is applied to the first electronic device. The mobile communication module 150 may include at least one filter, a switch, a power amplifier, a low noise amplifier (low noise amplifier, LNA), and the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal.

The wireless communication module 160 may provide a solution to wireless communication that is applied to the first electronic device and that includes a wireless local area network (wireless local area network, WLAN) (for example, a wireless fidelity (wireless fidelity, Wi-Fi) network), Bluetooth (Bluetooth, BT), and the like. The wireless communication module 160 may be one or more components integrating at least one communication processing module.

In some embodiments, in the first electronic device, the antenna 1 and the mobile communication module 150 are coupled, and the antenna 2 and the wireless communication module 160 are coupled, so that the first electronic device may communicate with a network and another device by using a wireless communication technology.

The first electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel.

The first electronic device may implement a shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format like RGB or YUV. In some embodiments, the first electronic device may include one or N cameras 193, where N is a positive integer greater than 1.

The digital signal processor is configured to process a digital signal, and may process another digital signal in addition to the digital image signal.

The video codec is configured to compress or decompress a digital video. The first electronic device may support one or more types of video codecs. Therefore, the first electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU may implement applications such as intelligent cognition of the first electronic device, for example, image recognition, facial recognition, voice recognition, and text understanding.

The external memory interface 120 may be configured to be connected to an external storage card, for example, a micro SD card, to extend a storage capability of the first electronic device. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the first electronic device. The internal memory 121 may include a program storage region and a data storage region.

The first electronic device may implement audio functions, for example, a music playing function and a recording function, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The first electronic device may be used to listen to music or answer a hands-free call through the speaker 170A.

The receiver 170B, also referred to as an "earpiece", is configured to convert an audio electrical signal into a sound signal. When a call is answered or voice information is received through the first electronic device, the receiver 170B may be put close to a human ear for listening to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the first electronic device. In some other embodiments, the first electronic device may be provided with two microphones 170C, to implement a noise reduction function, in addition to collecting the sound signal. In some other embodiments, the first electronic device may alternatively be provided with three, four, or more microphones 170C, to collect the sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials.

The gyroscope sensor 180B may be configured to determine a motion posture of the first electronic device. In some embodiments, an angular velocity of the first electronic device around three axes (that is, axes x, y, and z) may be determined through the gyroscope sensor 180B. The gyroscope sensor 180B may be configured to implement image stabilization during photographing.

The barometric pressure sensor 180C is configured to measure barometric pressure. In some embodiments, the first electronic device calculates an altitude based on a value of the barometric pressure measured by the barometric pressure sensor 180C, to assist in positioning and navigation.

The magnetic sensor 180D includes a Hall sensor. The first electronic device may detect opening and closing of a flip cover by using the magnetic sensor 180D. In some embodiments, when the first electronic device is a flip phone, the first electronic device may detect opening and closing of a flip cover by using the magnetic sensor 180D. Further, a feature like automatic unlocking of the flip cover is set based on a detected opening or closing state of the leather case or a detected opening or closing state of the flip cover.

The acceleration sensor 180E may detect a magnitude of acceleration of the first electronic device in each direction (generally three axes), may detect a magnitude and a direction of gravity when the first electronic device is still. The acceleration sensor 180E may be further configured to recognize a posture of an electronic device, and is used in screen switching between a landscape mode and a portrait mode, a pedometer, or another application.

The distance sensor 180F is configured to measure a distance. The first electronic device may measure the distance through infrared or laser. In some embodiments, in a photographing scenario, the first electronic device may measure the distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The first electronic device emits infrared light by using the light emitting diode. The first electronic device detects reflected infrared light from a nearby object by using the photodiode.

The ambient light sensor 180L is configured to sense ambient light brightness. The first electronic device may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the first electronic device is in a pocket, to avoid an unintentional touch.

The fingerprint sensor 180H is configured to collect a fingerprint. The first electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the first electronic device executes a temperature processing policy by using the temperature detected by the temperature sensor 180J.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K.

The button 190 includes a power button, a volume button, and the like. The button 190 may be a mechanical button, or may be a touch button. The first electronic device may receive a button input, and generate a button signal input related to user settings and function control of the first electronic device.

The motor 191 may generate a vibration prompt. The motor 191 may be configured to provide an incoming call vibration prompt or a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the first electronic device.

In this embodiment of this application, the first electronic device may further include: a laser sensor (not shown in the figure).

The laser sensor is configured to sense vibration of an object, and may convert the vibration into an electrical signal. In some embodiments, the laser sensor may detect vibration of a throat part, obtain a Doppler frequency shift signal when the throat part vibrates, and convert the Doppler frequency shift signal into an electrical signal corresponding to a vibration frequency of the throat part.

It may be understood that the first electronic device may further include another apparatus for detecting vibration of an object, for example, a vibration sensor (not shown) or an ultrasonic sensor (not shown).

In this embodiment of this application, the processor 110 may invoke the computer instructions stored in the internal memory 121, so that the first electronic device performs the video recording method in this embodiment of this application.

The following describes the second electronic device in the communication system 100.

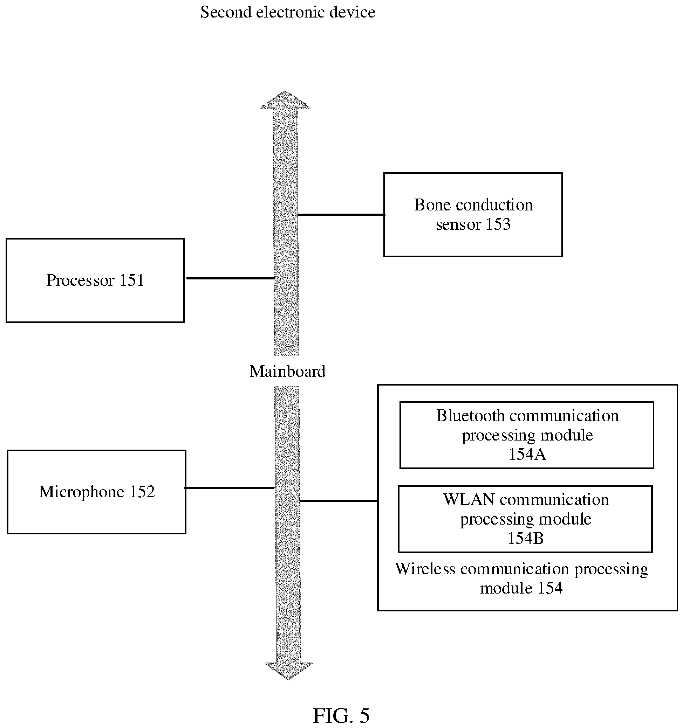

FIG. 5 is a schematic diagram of a structure of a second electronic device according to an embodiment of this application.

The following uses the second electronic device as an example to describe embodiments in detail. It should be understood that the second electronic device may include more or fewer components than those shown in the figure, two or more components may be combined, or there may be different component configurations. Various components shown in the figure may be implemented by using hardware including one or more signal processors and/or application-specific integrated circuits, software, or a combination of hardware and software.

In this embodiment of this application, the second electronic device may include: a processor 151, a microphone 152, a bone conduction sensor 153, and a wireless communication processing module 154.

The processor 151 may be configured to parse a signal received by the wireless communication processing module 154. The signal includes: a request that is sent by a first electronic device and that is for establishing a connection. The processor 151 may be further configured to generate a signal sent by the wireless communication processing module 154 to the outside, and the signal includes: a request for transmitting an audio signal to the first electronic device, and the like.

A memory may be further disposed in the processor 151, and is configured to store instructions. In some embodiments, the instructions may include: instructions for enhancing noise reduction, instructions for sending a signal, and the like.

The microphone 152 may collect a sound signal of a user and a part of another sound signal in a surrounding environment by using an air-to-sound conductivity. Then, the sound signal is converted into an electrical signal, to obtain an audio signal. The microphone 152 is also referred to as an "earpiece" or a "mic".

The second electronic device may include one or N microphones 152, where N is a positive integer greater than 1. When there are two or more microphones, different arrangement manners may be used to obtain different microphone arrays, and the microphone array may be used to improve quality of a collected sound signal.

The bone conduction sensor 153 may collect a sound signal by using a bone-to-sound conductivity. Most sound signals in the surrounding environment are conducted by air, and the bone conduction sensor may collect only a sound signal that is conducted by directly being in contact with a bone, for example, the sound signal of the user. Then the sound signal is converted into an electrical signal, to obtain a bone conduction audio signal.

The wireless communication processing module 154 may include one or more of a Bluetooth (Bluetooth, BT) communication processing module 154A and a WLAN communication processing module 154B, and is configured to provide services such as establishing a connection to the first electronic device and transmitting data.

The following specifically describes the video recording method in embodiments of this application with reference to the foregoing example of schematic diagrams of hardware structures of the first electronic device and the second electronic device.

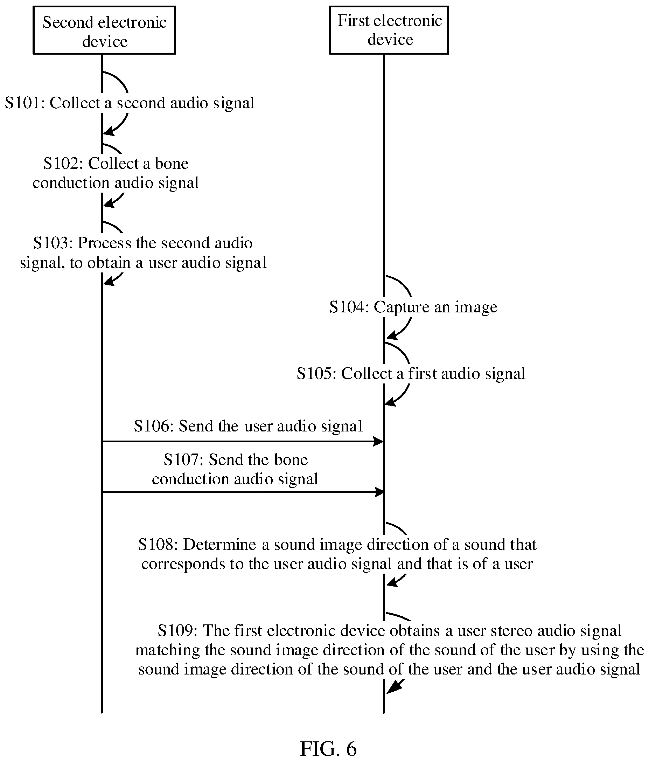

FIG. 6 is a schematic diagram of signaling interaction of a video recording method according to an embodiment of this application.

It is assumed that in this case, a first electronic device has established a connection to a second electronic device, and data transmission may be performed.

When a user is far away from an electronic device and uses the first electronic device to record a video, the first electronic device may continuously capture a plurality of frames of images, and continuously collect audio information in a shooting environment. In this case, the second electronic device also records an audio signal in the shooting environment.

Step S101 to step S109 describe a process of processing the audio signal (including audio signals such as a first audio signal, a second audio signal, a bone conduction audio signal, and a user audio signal) corresponding to a current frame image and the current frame image in a video recording process. It may be understood that an audio signal corresponding to each frame of image and each frame of image are processed according to descriptions of step S101 to step S 109, so that the video in this embodiment of this application may be obtained.

S 101: The second electronic device collects the second audio signal.

In the video recording process, the electronic device may continuously collect the second audio signal within a period of time (a time corresponding to playing a frame of image). The second audio signal may include sound information of the user and other sound information in a surrounding environment of the second electronic device.

It may be understood that, in different cases, a length of the period of time may be different. For example, 1/24 seconds or 1/12 seconds.

S 102: The second electronic device collects a bone conduction audio signal.

Optionally, in some embodiments, in the video recording process, the second electronic device may further continuously collect the bone conduction audio signal of the user in a period of time (a time corresponding to playing a frame of image) by using a bone conduction sensor.

S103: The second electronic device processes the second audio signal to obtain the user audio signal.

In some embodiments, the second electronic device may perform processing such as sampling and noise reduction on the second audio signal, to remove other sound information in an environment, to enhance sound information that is in the second audio signal and that is of the user, to obtain the user audio signal.

The user audio information obtained in the foregoing manner further includes a small part of the other sound information in the surrounding environment of the second electronic device in addition to the sound information when the user makes a sound. Therefore, optionally, in some other embodiments, to remove the other sound information in the surrounding environment of the second electronic device, to enable the user audio signal obtained after the second audio signal is processed to include only the sound information of the user, the second electronic device may perform joint noise reduction processing by using the bone conduction audio signal and the second audio signal, to remove the other sound information in the surrounding environment of the second electronic device from the second audio signal, to obtain the user audio signal.

Specifically, an implementation of joint noise reduction is the same as an implementation of performing joint noise reduction processing on multiple audio signals by a same electronic device in a conventional technology. This embodiment provides a manner of joint noise reduction processing: Differential calculation is performed on the bone conduction audio signal and the second audio signal, and noise in the bone conduction audio signal and the second audio signal is offset, so that effect of joint noise reduction is achieved. It should be noted that, in a process of performing the differential calculation, weighting needs to be performed based on sound wave intensity of the two audio signals, so that weighted noise intensity is basically the same, thereby implementing maximum noise reduction. In addition, if a normal audio signal, that is, a non-noise signal, is weakened after the differential calculation is performed, a differential audio signal may be amplified to obtain the user audio signal.

S 104: The first electronic device captures an image.

In the video recording process, a camera of the first electronic device may capture the image. The image may include a portrait, and the portrait may be a portrait of the user.

S 105: The first electronic device collects the first audio signal.

In the video recording process, a microphone of the first electronic device starts to continuously collect the first audio signal within a period of time. The first audio signal may include the sound information of the user and the other sound information in the surrounding environment of the first electronic device.

S 106: The second electronic device sends the user audio signal to the first electronic device.

The second electronic device may send the user audio signal to the first electronic device by using a wireless network.

S 107: The second electronic device sends the bone conduction audio signal to the first electronic device.

Optionally, the second electronic device may send the bone conduction audio signal to the first electronic device by using the wireless network.

S 108: The first electronic device determines a sound image direction of a sound that corresponds to the user audio signal and that is of the user.

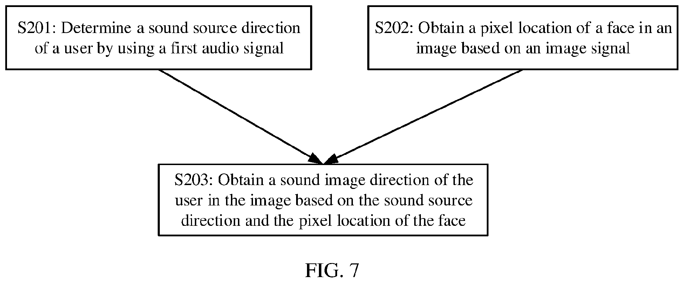

FIG. 7 is a flowchart of determining, by a first electronic device, a sound image direction of a sound that corresponds to a user audio signal and that is of a user.

In some embodiments, the first electronic device may first determine a sound source direction of the user by using a first audio signal. In some other embodiments, to improve accuracy of the obtained sound source direction of the user, the first electronic device may further obtain the sound source direction of the user by combining a bone conduction audio signal with the first audio signal. For detailed descriptions of the process, refer to step S201.

Then, the first electronic device may obtain a pixel location of a face in an image, and obtain the sound image direction of the sound of the user by using a pixel location of each face and with reference to the sound source direction of the user. For detailed descriptions of the process, refer to step S202 to step S204.

S201: The first electronic device determines the sound source direction of the user by using the first audio signal.

In some embodiments, the sound source direction of the user may be a direction angle of a sound source of the user relative to a microphone center of the first electronic device, and the direction angle may include at least one of an azimuth angle and a pitch angle. A horizontal angle is denoted as $\alpha$, and the pitch angle is denoted as $\beta$.

In some other embodiments, the sound source direction of the user may be an azimuth angle of the sound source of the user relative to the microphone center of the first electronic device.

It may be understood that there may be another manner of representing the sound source direction of the user. This is not limited in this embodiment of this application.

It is assumed that in this case, the sound source direction of the user is represented as the horizontal angle and the pitch angle of the sound source relative to the microphone of the first electronic device, and may be denoted as $\theta = [\alpha, \beta]$.

The horizontal angle $\alpha$ and the pitch angle $\beta$ may be obtained by using the first audio signal. For a specific implementation, refer to the description of the following algorithm:

In some embodiments, the first electronic device may determine the horizontal angle $\alpha$ and the pitch angle $\beta$ based on a high-resolution spatial spectrum estimation algorithm and by using the first audio signal.

In some other embodiments, the first electronic device may determine the horizontal angle $\alpha$ and the pitch angle $\beta$ based on a maximum output power beamforming algorithm and based on beamforming (beamforming) of N microphones and the first audio signal.

It may be understood that the first electronic device may alternatively determine the horizontal angle $\alpha$ and the pitch angle $\beta$ in another manner. This is not limited in this embodiment of this application.

The following uses an example in which the horizontal angle $\alpha$ and the pitch angle $\beta$ are determined based on the maximum output power beamforming algorithm to describe in detail a possible implementation algorithm by combining a specific algorithm. It may be understood that the algorithm does not limit this application.

The first electronic device may determine a beam direction with maximum power as a target sound source direction by comparing output power of the first audio signal in each direction, and the target sound source direction is the sound source direction of the user. A formula for the target sound source direction $\theta$ is obtained and may be represented as follows:

$$\max_{\theta} \sum_{t} \left\| \sum_{i} H_i(f,\theta) Y_i(f,t) \right\|^2$$

In the formula, t represents a time frame, that is, a processing frame for an audio signal. i represents an $i^{th}$ microphone, $H_i(f,\theta)$ represents a beam weight of the $i^{th}$ microphone in beamforming, and $Y_i(f,t)$ represents an audio signal on time-frequency domain obtained by sound information collected by the $i^{th}$ microphone.

Beamforming is a response of the N microphones to a narrowband sound signal. The response is different in different directions, and therefore, the beamforming and the sound source direction are associated with each other. Therefore, the beamforming may locate the sound source in real time and suppress interference of background noise.

The beamforming may be represented as a matrix of $1 \times N$, denoted as $H(f,\theta)$, and N is a quantity of microphones. A value of an $i^{th}$ element in the beamforming may be represented as $H_i(f,\theta)$, and the value is related to an arrangement location of the $i^{th}$ microphone in the N microphones. The beamforming may be obtained by using a power spectrum, and the power spectrum may be a capon spectrum, a bartlett spectrum, and the like.

For example, the bartlett spectrum is used as an example, the $i^{th}$ element that is in obtained by the first electronic device by using the bartlett spectrum and that is in the beamforming may be represented as $H_i(f,\theta) = exp\{j\varphi_f(\tau_i)\}$. In the formula, j is an imaginary number, $\varphi_f$ is a phase compensation value of beamformer for the microphone, and $\tau_i$ represents a delay difference when same sound information reaches the $i^{th}$ microphone. The delay difference is related to the sound source direction and a location of the $i^{th}$ microphone. For details, refer to the following description.

A center of a first microphone that can receive sound information among the N microphones is selected as an origin, to establish a three-dimensional spatial coordinate system. In the three-dimensional spatial coordinate system, a location of an $N^{th}$ microphone may be represented as $P_i = [x_i, y_i, z_i]$. A relationship between the $\tau_i$ and the sound source direction and the location of the $i^{th}$ microphone may be represented by using the following formula:

$$\tau_i = \frac{x_i sin\alpha cos\beta + y_i sin\beta + z_i cos\alpha cos\beta}{c}$$

In the formula, c is a propagation speed of a sound signal.

The first audio signal includes the audio signal obtained by the sound information collected by the N microphones, where N is a positive integer greater than 1.

The sound information collected by the $i^{th}$ microphone may be converted into an audio signal in the time-frequency domain, and is represented as $Y_i(f,t) = exp\{-j\varphi_f(\tau_i)\}s_o(f,t)$. $s_o(f,t)$ is the audio signal that is converted from the sound information collected by the microphone that serves as an origin and that is in the time-frequency domain with changes of time t.

In some embodiments, when the first audio signal is broadband information, to improve processing precision, the first audio signal may be divided to be in frequency domain by using discrete Fourier transform (discrete Fourier transform, DFT), to obtain a plurality of narrowband audio signals, and a positioning result of the broadband audio signal is obtained by combining a processing result of the narrowband audio signal at each frequency. For example, a broadband audio signal with a sampling rate of 48 kHz is divided into 2049 narrowband audio signals through 4096 point DFT. Then, each narrowband audio signal or a plurality of narrowband audio signals in the 2049 narrowband audio signals are processed by using the foregoing algorithm, so that a target sound source direction may be determined. A formula for the target sound source direction $\theta$ is obtained and may be represented as follows:

$$max_{\theta} \sum_{f} \sum_{t} \left\| \sum_{i} H_i(f,\theta)Y_i(f,t) \right\|^2$$

In the formula, f represents a frequency value in frequency domain.

Optionally, in some other embodiments, the first audio signal further includes some other sound information in addition to the sound information of the user. To prevent other sound information from affecting determining of the sound source direction of the user, the first electronic device may filter out the other sound signal in the first audio signal by using the bone conduction audio signal, to enhance the sound information of the user in the first audio information, so that an obtained sound source direction of the user is more accurate.

For example, correlation analysis may be performed on the first audio signal with reference to the bone conduction audio signal, and a large weight is set for audio information that is in the first audio signal and that corresponds to a time frequency that is strongly correlated with the bone conduction audio signal, and a small weight is set for audio information that corresponds to a time frequency that is weakly correlated with the bone conduction audio signal. A weight matrix w(f, t) is obtained. An element in the weight matrix may be denoted as $w_{mn}$, and represents a weight of an audio signal whose frequency is n at an $m^{th}$ time. A formula of the target sound source direction $\theta$ that is obtained by using the bone conduction audio signal and with reference to the first audio signal may be obtained by using the weight matrix w(f, t) and with reference to the foregoing algorithm, and may be represented as follows:

$$max_{\theta} \sum_{f} \sum_{t} w(f,t) \left\| \sum_{i} H_i(f,\theta)Y_i(f,t) \right\|^2$$

S202: The first electronic device obtains the pixel location of the face in the image based on the image.

Faces are all faces that can be recognized by the first electronic device in the image, and the pixel location of the face in the image may be represented by pixel coordinates of the face in an image pixel coordinate system.

In some implementations, a pixel point may be selected from the face, and pixel coordinates of the point are used to represent the pixel location of the face. For example, pixel coordinates of a central point of a mouth may be used as the pixel location of the face, or pixel coordinates of a central point of the face may be used as the pixel location of the face.

The first electronic device may sample N frames of images obtained by using an image in a period of time, and determine a pixel location of a face in a frame of image.

In some embodiments, the first electronic device may perform facial recognition on the image to obtain the pixel coordinates of the face. The pixel coordinates are the pixel location of the face in the image in this time period.

The pixel location of the face may be represented by a matrix, and is denoted as H. An $i^{th}$ element in the matrix represents a pixel location of an $i^{th}$ face in the image, and may be represented as $H_i = [u_i, v_i]$.

S203: The first electronic device obtains a visual image direction of the user in the image based on the sound source direction and the pixel location of the face.

The first electronic device may obtain, based on the sound source direction and the pixel location of the face, a correlation between the pixel location of each face and the sound source direction. If a correlation between a pixel location of a specific face and the sound source direction is stronger, the first electronic device determines that a visual image direction of the face is the visual image direction of the user.

Specifically, the first electronic device may obtain approximate pixel coordinates of the user in the image by using the sound source direction. Then, a pixel location of the face closest to the approximate pixel coordinates is determined from the pixel locations of the face. The pixel location of the face is used as the pixel coordinates of the user in the image. Then, the visual image direction of the user is obtained by using the pixel coordinates of the user in the image.

The following provides an implementation of an algorithm. It may be understood that the algorithm does not limit this embodiment of this application.

It is assumed that in this case, the sound source direction of the user is represented as the horizontal angle and the pitch angle of the sound source relative to the microphone of the first electronic device, and may be denoted as $\theta = [\alpha, \beta]$. For an algorithm for obtaining the visual image direction of the user by using the sound source direction, refer to the following description.

The sound source direction is obtained relative to the microphone center. In the first electronic device, a distance between the microphone center and a camera center is far less than a distance between the first electronic device and the user. Therefore, the sound source direction may be considered to be obtained relative to the camera center. The horizontal angle $\alpha$ and the pitch angle $\beta$ that correspond to the sound source direction are used as approximate horizontal

angle $\alpha$ and pitch angle $\beta$ of the user relative to a camera, and the visual image direction of the user may be obtained by using a related algorithm including a camera parameter.

Specifically, first, coordinates of the user in an image coordinate system may be obtained by using the horizontal angle $\alpha$ and the pitch angle $\beta$, and a formula of $x$ in $g$ is obtained and may be represented as: $x = f \tan \alpha$, where $f$ in the formula is a focal length of the camera. A formula of $y$ in $g$ is obtained and may be represented as: $y = f \cos \alpha \tan \beta$.

Then, coordinates $g = [x,y]$ in the image coordinate system are converted into pixel coordinates $h = [u, v]$ in the image. The pixel coordinates $h = [u, v]$ are approximate pixel coordinates of the user in the image, and a conversion formula of the pixel coordinates may be represented as follows:

$$u = \frac{x}{dx} + u_0; v = \frac{y}{dy} + v_0$$

In the formulas, $u_0$ and $v_0$ are values of an origin in an image plane coordinate system in pixel coordinates ($u_0$, $v_0$) in an image pixel coordinate system in the image, $dx$ is a length of a pixel in a U-axis direction in the image, and $dy$ is a length of a pixel in a V-axis direction in the image.

Then, matching is performed by using the approximate pixel coordinates $h = [u, v]$ and the pixel location $H_i = [u_i, v_i]$ of the face, to obtain a correlation between each face and the approximate pixel coordinates $h = [u, v]$. For example, it may be considered that a smaller distance between the pixel location of the face and the approximate pixel coordinates indicates a stronger correlation, and the correlation between the pixel location of the face and the sound source direction is stronger. A pixel location of the face that has a strongest correlation with $h = [u, v]$ in $H_i = [u_i, v_i]$ is used as pixel coordinates of the user in the image, and may be represented as $h' = [u', v']$.

Finally, the pixel coordinates of the user in the image are converted into the horizontal angle $\alpha'$ and the pitch angle $\beta'$ relative to the camera, and are used as the visual image direction $\theta' = [\alpha', \beta']$ of the user. The conversion process is reverse to the foregoing process of obtaining the approximate pixel coordinates $h = [u, v]$ of the user in the image by using the horizontal angle $\alpha$ and the pitch angle $\beta$, and details are not described herein again.

It may be understood that when the sound source direction is represented in different manners, conversion manners may be different. The algorithm in step S203 is not limited in this embodiment of this application.

In some embodiments, to further improve accuracy of obtaining the visual image direction of the user by the first electronic device, the correlation between each face and the sound source direction obtained in step S201 to step S203 may be used as a first determining factor.

Then, a second determining factor is added to jointly determine a user in a face with the first determining factor. The second determining factor is a correlation between a first feature of each face and a first feature in the bone conduction audio signal of the user.

Specifically, the first electronic device may perform first feature from extraction on the sound signal of the user by using the bone conduction audio signal, to obtain the first feature in the sound signal of the user. The first feature extraction is performed on the face in the image, to obtain the first feature of each face in the image.

The first feature of the face may be obtained in different manners.

For example, in some embodiments, the first electronic device may perform the first feature extraction on the face by using an image, and the first electronic device may use the first feature as the first feature of the face. In this case, the first feature may include a voice activity detection (voice activity detection, VAD) feature, a phoneme (phoneme) feature, and the like.

In some other embodiments, the first electronic device may perform the first feature extraction by using an ultrasonic echo signal or a laser echo signal that is generated due to throat vibration when a face makes a sound. In this case, the first feature may be a pitch (pitch) feature and the like. The first electronic device may use the first feature as the first feature of the face.

The ultrasonic echo signal generated due to throat vibration when a person makes a sound may be collected by using a vibration sensor or an ultrasonic sensor of the first electronic device. The laser echo signal may be collected by using a laser sensor of the first electronic device.

The first electronic device may perform correlation analysis by using the first feature in the sound signal of the user and the first feature of the face in the image, to obtain a correlation between the first feature of each face and the first feature in the bone conduction audio signal of the user, and use the correlation as the second determining factor.

A distance between the microphone center and the camera center is far less than a distance between the first electronic device and the user, and therefore, the first electronic device may determine the visual image direction of the user as the sound image direction of the sound of the user.

S 109: The first electronic device obtains a stereo audio signal by using the sound image direction of the sound of the user and the user audio signal.

In some embodiments, the stereo audio signal includes only a user stereo audio signal but does not include an ambient stereo audio signal. In this case, the user stereo audio signal is the stereo audio signal. The user stereo audio signal includes sound information of the user. The user stereo audio signal may be used to reproduce the sound of the user. In the sound that is of the user and that is reproduced by the user stereo audio signal, the sound image direction of the sound of the user matches the visual image direction of the user.

The user stereo audio signal is a dual-channel user audio signal.

The foregoing user audio signal is a single-channel audio signal, and a sound that is of the user and that restores the foregoing user audio signal is not a stereo. To obtain the user stereo audio signal and more truly restore the sound of the user, the single-channel audio signal may be converted into the dual-channel user audio signal. The sound that is of the user and that is restored from the dual-channel user audio signals is the stereo.

The first electronic device may obtain a user stereo audio signal corresponding to the sound image direction of the sound of the user by using the sound image direction of the sound of the user and with reference to the user audio signal.

Specifically, the first electronic device performs convolution on the user audio signal and a head-related impulse response (head-related impulse response, HRIR) corresponding to the sound image direction of the sound of the user to restore an inter-aural level difference (inter-aural level difference, ILD), an inter-aural time difference (inter-aural time difference, ITD), and a spectral clue, so that a single-channel user audio signal may be converted into a dual-channel user audio signal, and the dual channel may include a left channel and a right channel. The ILD, the ITD, and the spectral clue are used to enable the dual-channel user audio signals to determine the sound image direction of the sound of the user.

It may be understood that, in addition to an HRIR algorithm, the first electronic device may further use another algorithm to obtain the dual-channel user audio signal, for example, a binaural room impulse response (binaural room impulse response, BRIR).

In some embodiments, in a recorded video, in addition to the user stereo audio signal, stereo audio information may further include an ambient stereo audio signal. The ambient stereo audio signal may be used to reproduce another sound in addition to the sound of the user in a shooting environment. The ambient stereo audio signal is a dual-channel ambient audio signal, and the ambient audio signal is an electrical signal converted from another sound signal in an environment.

Generally, the second electronic device filters out most other sound information in the environment when collecting the sound signal, the other sound information in the environment included in the first audio signal is clearer than the other sound information in second information. In this case, the first electronic device may obtain an audio signal of another sound in the environment by using the first audio signal, and the audio signal of the another sound is the ambient audio signal. Then, the ambient stereo audio signal is obtained by using the ambient audio signal.

Specifically, in some embodiments, first, the first electronic device may perform adaptive blocking filtering by using the first audio signal and the user audio signal, to filter out the sound information that is in the first audio signal and that is of the user, to obtain the ambient audio signal. Then, a dual-channel ambient audio signal is obtained through beamforming of the first electronic device, and the dual-channel ambient audio signal may be in an X/Y standard, an M/S standard, or an A/B standard.

In some other embodiments, the first electronic device may further obtain the ambient stereo audio signal in another manner, for example, first obtain a first stereo audio signal by using the first audio signal. The first stereo audio signal is a first dual-channel audio signal. Then, the adaptive blocking filtering is performed by using the first stereo audio signal and the user audio signal, to filter out the sound information that is in the first stereo audio signal and that is of the user, to obtain the ambient stereo audio signal. This is not limited in this embodiment of this application.

Then, the ambient stereo audio signal and the user stereo audio signal are mixed to obtain a stereo audio signal that includes both the sound information of the user and the other sound information in the environment.

In a process of mixing the ambient stereo audio signal and the user stereo audio signal, the first electronic device may further perform audio zooming on the user stereo audio signal, to implement matching between a size of a sound image of the user and a distance between the user and the first electronic device when the user makes a sound. The size of the sound image of the user is a volume of the sound of the user in the video.

The first electronic device may determine a volume of the user stereo audio signal in the video based on focus information given by the user.

Specifically, in some embodiments, when recording a video, the first electronic device responds to an operation of the user of increasing a shooting focal length, and the first electronic device determines that the user is closer to the first electronic device. In this case, the first electronic device may enhance the user stereo audio signal. The ambient stereo audio signal does not change or is suppressed. Then, the user audio signal and the ambient stereo audio signal are mixed to obtain the stereo audio signal. In this case, in the video, a volume of the sound of the user in the stereo audio signal becomes higher, and a volume of another sound in the environment is low.

The first electronic device suppresses the ambient stereo audio signal, so that another sound that is restored by the ambient stereo audio signal and that is around the first electronic device becomes smaller.

In some embodiments, when recording a video, the first electronic device responds to an operation of the user of decreasing a shooting focal length, and the first electronic device determines that the user is farther from the first electronic device. In this case, the first electronic device may suppress the user stereo audio signal. The ambient stereo audio signal does not change or is enhanced. Then, the user audio signal and the ambient stereo audio signal are mixed to obtain the stereo audio signal. In this case, in the video, a volume of the sound of the user in the stereo audio signal becomes lower, and a volume of another sound in the environment is high.

In some other embodiments, in addition to the shooting focal length set by the user, the first electronic device may alternatively mix the ambient stereo audio signal and the user stereo audio signal in another form according to a specific volume proportion. For example, a default audio mixing proportion may be set. This is not limited in this embodiment of this application.

It should be understood that there is no sequence in the foregoing step S101 to step S105, provided that step S103 is after step S101. Step S106 and step S107 may be performed in any sequence, or may be performed simultaneously. To be specific, in some embodiments, the second electronic device may encode the user audio signal and the bone conduction audio signal together, and send encoded user audio signal and bone conduction audio signal to the first electronic device.

It may be understood that, when the user uses the second electronic device, the user may obtain, by using the first electronic device, a user stereo audio signal corresponding to a plurality of frames of images for a plurality of times according to step S101 to step S 109, and the stereo audio signal corresponding to the plurality of frames of images is encoded to obtain an audio stream. In addition, the plurality of frames of images are encoded to obtain a video stream. Then, the audio stream and the video stream are mixed to obtain a recorded video. The electronic device may process the plurality of frames of images in the video to obtain a plurality of frames of images.

When playing the video, the first electronic device may play a frame of image at a specific moment, and the image stays on a display for a period of time. In a period of time starting from the moment, the first electronic device may play a stereo audio signal corresponding to the frame of image, and the stereo audio signal may restore a sound of the user. In this case, a sound image direction of the sound of the user matches a visual image direction of the user. After a current frame image is played, a next frame image may be played, and a stereo audio signal corresponding to the next frame image is played at the same time until the video ends.

For example, at a first moment, the first electronic device may play a first frame image, and start to play a stereo audio signal corresponding to the first frame image, and the stereo audio signal may restore a sound of the user. In this case, in the first frame image, a visual image direction of the user is to the left, and a sound image direction of a sound that is restored from the stereo audio signal corresponding to the frame image and that is of the user is also to the left. The first frame image may stay on the display of the electronic device for a period of time, and the first electronic device may continuously play the stereo audio signal corresponding to the frame image within the period of time. Then, at a second moment, the first electronic device may play a second frame image, and start to play a stereo audio signal corresponding to the second frame image, and the stereo audio signal corresponding to the second frame image may restore a sound of the user. In this case, in the second frame image, a visual image direction of the user is to the right, and a sound image direction of a sound that is restored from the stereo audio signal corresponding to the second frame image and that is of the user is also to the right.

The sound image direction of the sound of the user in the video matches the visual image direction of the user. The user audio signal in the stereo audio signal in the video is collected by the second electronic device. The stereo user audio signal may restore the sound of the user, and the sound of the user is clear.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in the foregoing embodiments may be implemented by a computer program by instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

**Claims**

1.   A video recording method, comprising:

in a video recording process of a first electronic device, collecting, by the first electronic device, an image and a first audio signal;
determining, by the first electronic device, a sound image direction of a sound of a user in the image based on the image and the first audio signal;
generating, by the first electronic device, a stereo audio signal based on the sound image direction of the sound of the user and a user audio signal, wherein the user audio signal is obtained by the second electronic device and sent to the first electronic device; and
generating, by the first electronic device, a video based on the image and the stereo audio signal.

2.   The method according to claim 1, wherein the determining, by the first electronic device, a sound image direction of a sound of a user in the image based on the image and the first audio signal specifically comprises:

performing, by the first electronic device, facial recognition on the image to obtain a pixel location of a face;
determining, by the first electronic device, a sound source direction of the user based on the first audio signal;
determining, by the first electronic device, a pixel location of the user in the image based on the sound source direction of the user and the pixel location of the face; and
determining, by the first electronic device, the sound image direction of the sound of the user in the image based on the pixel location of the user in the image.

3.   The method according to claim 1, wherein the determining, by the first electronic device, a sound image direction of a sound of a user in the image based on the image and the first audio signal specifically comprises:

performing, by the first electronic device, facial recognition on the image to obtain a pixel location of a face;
determining, by the first electronic device, a sound source direction of the user by using a bone conduction audio signal and with reference to the first audio signal, wherein the bone conduction audio signal is obtained by the second electronic device and sent to the first electronic device;
determining, by the first electronic device, a pixel location of the user in the image based on the sound source direction of the user and the pixel location of the face; and
determining, by the first electronic device, the sound image direction of the sound of the user in the image based on the pixel location of the user in the image.

4.   The method according to claims 1 to 3, wherein the generating, by the first electronic device, a stereo audio signal based on the sound image direction of the sound of the user and a user audio signal specifically comprises:

generating, by the first electronic device, an ambient stereo audio signal; and
generating, by the first electronic device, the stereo audio signal based on the sound image direction of the sound of the user, the user audio signal, and the ambient stereo audio signal.

5.   The method according to claim 4, wherein the generating, by the first electronic device, an ambient stereo audio signal specifically comprises:

performing, by the first electronic device, adaptive blocking filtering on the first audio signal based on the user audio signal, to filter out sound information that is in the first audio signal and that is of the user; and

generating, by the first electronic device, the ambient stereo audio signal based on a filtered first audio signal.

6. The method according to claim 4, wherein the generating, by the first electronic device, an ambient stereo audio signal specifically comprises:

generating, by the first electronic device, a first stereo audio signal by using the first audio signal; and
performing, by the first electronic device, adaptive blocking filtering on the first stereo audio signal based on the user audio signal, to filter out sound information that is in the first stereo audio signal and that is of the user, to obtain the ambient stereo audio signal.

7. The method according to claim 4, wherein the generating, by the first electronic device, the stereo audio signal based on the sound image direction of the sound of the user, the user audio signal, and the ambient stereo audio signal specifically comprises:

generating, by the first electronic device, a user stereo audio signal based on the sound image direction of the sound of the user and the user audio signal;
enhancing, by the first electronic device, the user stereo audio signal without changing the ambient stereo audio signal; and
generating, by the first electronic device, the stereo audio signal based on an enhanced user stereo audio signal and the ambient stereo audio signal.

8. The method according to claim 4, wherein the generating, by the first electronic device, the stereo audio signal based on the sound image direction of the sound of the user, the user audio signal, and the ambient stereo audio signal specifically comprises:

generating, by the first electronic device, a user stereo audio signal based on the sound image direction of the sound of the user and the user audio signal;
enhancing, by the first electronic device, the user stereo audio signal while suppressing the ambient stereo audio signal; and
generating, by the first electronic device, the stereo audio signal based on an enhanced user stereo audio signal and a suppressed ambient stereo audio signal.

9. The method according to claims 1 to 8, wherein the user audio signal is obtained by performing, by the second electronic device, joint noise reduction processing on the second audio signal based on the bone conduction audio signal to remove other sound information that is in the second audio signal and that is in a surrounding environment of the second electronic device.

10. The method according to claims 1 to 8, wherein the user audio signal is obtained by performing, by the second electronic device, noise reduction processing based on a second audio signal to remove other sound information that is in the second audio signal and that is in a surrounding environment of the second electronic device.

11. An electronic device, wherein the electronic device comprises: one or more processors and a memory, wherein the memory is coupled to the one or more processors, the memory is configured to store computer program code, the computer program code comprises computer instructions, and the one or more processors invoke the computer instructions to enable the electronic device to perform:

collecting an image and a first audio signal in a video recording process;
determining a sound image direction of a sound of a user in the image based on the image and the first audio signal;
generating a stereo audio signal based on the sound image direction of the sound of the user and a user audio signal, wherein the user audio signal is obtained by the second electronic device and sent to the electronic device; and
generating a video based on the image and the stereo audio signal.

12. The electronic device according to claim 11, wherein the one or more processors are specifically configured to invoke the computer instructions to enable the electronic device to perform:

performing facial recognition on the image to obtain a pixel location of a face;
determining a sound source direction of the user based on the first audio signal;
determining a pixel location of the user in the image based on the sound source direction of the user and the pixel location of the face; and
determining the sound image direction of the sound of the user in the image based on the pixel location of the user in the image.

13. The electronic device according to claim 11, wherein the one or more processors are specifically configured to invoke the computer instructions to enable the electronic device to perform:

performing facial recognition on the image to obtain a pixel location of a face;
determining a sound source direction of the user by using a bone conduction audio signal and with reference to the first audio signal, wherein the bone conduction audio signal is obtained by the second electronic device and sent to the electronic device;
determining a pixel location of the user in the image based on the sound source direction of the user and the pixel location of the face; and
determining the sound image direction of the sound of the user in the image based on the pixel location of the user in the image.

14. The electronic device according to claims 11 to 13, wherein the one or more processors are specifically configured to invoke the computer instructions to enable the electronic device to perform:

generating an ambient stereo audio signal; and
generating the stereo audio signal based on the sound image direction of the sound of the user, the user audio signal, and the ambient stereo audio signal.

15. The electronic device according to claim 14, wherein the one or more processors are specifically configured to invoke the computer instructions to enable the electronic device to perform:

performing adaptive blocking filtering on the first audio signal based on the user audio signal, to filter out sound information that is in the first audio signal and that is of the user; and
generating the ambient stereo audio signal based on a filtered first audio signal.

16. The electronic device according to claim 14, wherein the one or more processors are specifically configured to invoke the computer instructions to enable the electronic device to perform:
performing adaptive blocking filtering on the first stereo audio signal based on the user audio signal, to filter out sound information that is in the first stereo audio signal and that is of the user, to obtain the ambient stereo audio signal.

17. The electronic device according to claim 14, wherein the one or more processors are specifically configured to invoke the computer instructions to enable the electronic device to perform:

generating a user stereo audio signal based on the sound image direction of the sound of the user and the user audio signal;
enhancing the user stereo audio signal without changing the ambient stereo audio signal; and
generating the stereo audio signal based on an enhanced user stereo audio signal and the ambient stereo audio signal.

18. The electronic device according to claim 14, wherein the one or more processors are specifically configured to invoke the computer instructions to enable the electronic device to perform:

generating a user stereo audio signal based on the sound image direction of the sound of the user and the user audio signal;
enhancing the user stereo audio signal while suppressing the ambient stereo audio signal; and
generating the stereo audio signal based on an enhanced user stereo audio signal and a suppressed ambient stereo audio signal.

19. A chip system, wherein the chip system is used in an electronic device, the chip system comprises one or more processors, and the processor is configured to invoke computer instructions to enable the electronic device to perform the method according to any one of claims 1 to 10.

20. A computer program product comprising instructions, wherein when the computer program product is run on an electronic device, the electronic device is enabled to perform the method according to any one of claims 1 to 10.

21. A computer-readable storage medium, comprising instructions, wherein when the instructions are run on an electronic device, the electronic device is enabled to perform the method according to any one of claims 1 to 10.

$Y_w$

$X_w$

$Z_w$

$O_3$ World coordinate
system

$Z_c$

$Y_c$

f

$X_c$

$O_1$

Camera
coordinate system

$Y$

$O_2$ $X$

$Z_c$

$y$

$x$

$Z_c$

$y_c$

Image plane
coordinate system

$x_c$

$(x_c, y_c, z_c)$

FIG. 1a

Image pixel coordinate system

O

U

$O_2$

X

V

Y

FIG. 1b

Image pixel coordinate system

FIG. 1c

To the left

00:13

1.0

FIG. 2a

FIG. 2b

Communication system 100

Second electronic
device

Third electronic
device

···

Another
electronic device

Wireless network

First electronic
device

FIG. 3

First electronic device

Antenna 1                                    Antenna 2

```
      Y       Y                          Y       Y
```

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging management module [140]

Power management module [141]

Battery [142]

Charging input

FIG. 4

Second electronic device

Bone conduction
sensor 153

Processor 151

Mainboard

Microphone 152

Bluetooth communication
processing module
154A

WLAN communication
processing module
154B

Wireless communication processing
module 154

FIG. 5

```
┌─────────────────┐                    ┌─────────────────┐
│ Second electronic│                    │ First electronic│
│     device       │                    │     device      │
└─────────────────┘                    └─────────────────┘
```

S101: Collect a second audio signal

S102: Collect a bone
conduction audio signal

S103: Process the second audio
signal, to obtain a user audio signal

S104: Capture an image

S105: Collect a first audio signal

S106: Send the user audio signal

S107: Send the bone
conduction audio signal

S108: Determine a sound image direction of a sound that
corresponds to the user audio signal and that is of a user

S109: The first electronic device obtains a user stereo audio signal
matching the sound image direction of the sound of the user by using the
sound image direction of the sound of the user and the user audio signal

FIG. 6

S201: Determine a sound source direction of a user by using a first audio signal

S202: Obtain a pixel location of a face in an image based on an image signal

S203: Obtain a sound image direction of the user in the image based on the sound source direction and the pixel location of the face

FIG. 7

## INTERNATIONAL SEARCH REPORT

| International application No. |
| --- |
| **PCT/CN2022/086166** |

| A. | CLASSIFICATION OF SUBJECT MATTER |
| --- | --- |
| | H04N 5/76(2006.01)i; G10L 21/0208(2013.01)i |

According to International Patent Classification (IPC) or to both national classification and IPC

| B. | FIELDS SEARCHED |
| --- | --- |

Minimum documentation searched (classification system followed by classification symbols)

H04N; G10L

Documentation searched other than minimum documentation to the extent that such documents are included in the fields searched

Electronic data base consulted during the international search (name of data base and, where practicable, search terms used)

CNTXT, CNKI: 声像, 声音, 声象, 音频, 立体声, 位置, 方位, 人, 对象, 噪声, 滤除, 滤波, 视频, 骨传导; VEN, USTXT, WOTXT, EPTXT: stereoscopic, audio, sound, voice, video, bone conduction, microphone, image, position, location, noise, reduce

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 1845582 A (SONY CORPORATION) 11 October 2006 (2006-10-11) description, page 4, paragraph 1 - page 16, paragraph 1, and figure 2 | 1, 4-11, 14-21 |
| Y | CN 1845582 A (SONY CORPORATION) 11 October 2006 (2006-10-11) description, page 4, paragraph 1 - page 16, paragraph 1, and figure 2 | 2-3, 12-13 |
| Y | CN 107004426 B (HUAWEI TECHNOLOGIES CO., LTD.) 11 September 2020 (2020-09-11) description, paragraphs 54-121 | 2-3, 12-13 |
| A | CN 104581512 A (GUANGDONG OPPO MOBILE TELECOMMUNICATIONS CO., LTD) 29 April 2015 (2015-04-29) entire document | 1-21 |
| A | CN 111402915 A (LENOVO (BEIJING) LIMITED) 10 July 2020 (2020-07-10) entire document | 1-21 |
| A | CN 111970625 A (OPPO GUANGDONG MOBILE TELECOMMUNICATIONS CO., LTD.) 20 November 2020 (2020-11-20) entire document | 1-21 |
| A | CN 110740259 A (VIVO COMMUNICATION TECHNOLOGY CO., LTD.) 31 January 2020 (2020-01-31) entire document | 1-21 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 June 2022** | **30 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/086166** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112165590 A (LENOVO (BEIJING) LIMITED) 01 January 2021 (2021-01-01)<br>entire document | 1-21 |
| A | US 2018115744 A1 (PLANTRONICS, INC.) 26 April 2018 (2018-04-26)<br>entire document | 1-21 |

Form PCT/ISA/210 (second sheet) (January 2015)

**INTERNATIONAL SEARCH REPORT**
Information on patent family members

International application No.

**PCT/CN2022/086166**

| Patent document cited in search report | | | Publication date (day/month/year) | Patent family member(s) | | | Publication date (day/month/year) |
|---|---|---|---|---|---|---|---|
| CN | 1845582 | A | 11 October 2006 | KR | 20060107328 | A | 13 October 2006 |
| | | | | US | 2006227224 | A1 | 12 October 2006 |
| | | | | JP | 2006314078 | A | 16 November 2006 |
| | | | | TW | 200718179 | A | 01 May 2007 |
| | | | | EP | 1711003 | A2 | 11 October 2006 |
| CN | 107004426 | B | 01 August 2017 | US | 2017263264 | A1 | 14 September 2017 |
| | | | | WO | 2016082199 | A1 | 02 June 2016 |
| CN | 104581512 | A | 29 April 2015 | None | | | |
| CN | 111402915 | A | 10 July 2020 | None | | | |
| CN | 111970625 | A | 20 November 2020 | None | | | |
| CN | 110740259 | A | 31 January 2020 | WO | 2021078116 | A1 | 29 April 2021 |
| CN | 112165590 | A | 01 January 2021 | None | | | |
| US | 2018115744 | A1 | 26 April 2018 | None | | | |

Form PCT/ISA/210 (patent family annex) (January 2015)

**REFERENCES CITED IN THE DESCRIPTION**

**Patent documents cited in the description**

- CN 202110415047